# EUROPÄISCHE PATENTSCHRIFT

(11) **EP 0 921 385 B1**
(45) Veröffentlichungstag und Bekanntmachung des Hinweises auf die Patenterteilung: **22.12.2004**
(21) Anmeldenummer: 98250393.0
(22) Anmeldetag: 10.11.1998
(51) Int. Cl.: G01M 3/02, F16L 19/02

(54) **Vorrichtung zum Verschliessen einer Rohrleitung zur Durchführung einer Druckprüfung**
Device for closing off a pipe for a pressure test
Dispositif d'obturation d'un tube pour un essai sous pression

(30) Priorität: 04.12.1997 DE 19755879
(43) Veröffentlichungstag der Anmeldung: 09.06.1999
(73) Patentinhaber: TechNeu GmbH, 8320 Fehraltorf (CH)
(72) Erfinder: Franzen, Rainer, 47802 Krefeld (DE); Hartings, Karl-Heinz, 40764 Langenfeld (DE); Foering, Herbert, 42697 Solingen (DE); Keller, Ruedi, 8320 Fehraltorf (CH)
(74) Vertreter: Gachnang, Hans Rudolf

(56) Entgegenhaltungen:
- EP-A- 0 300 795
- CH-A- 687 412
- US-A- 4 452 070

## Beschreibung

Die Erfindung betrifft eine Vorrichtung zum Verschließen einer Rohrleitung zur Durchführung einer Druckprüfung gemäß dem Oberbegriff des Patentanspruches 1.

Aus der CH 681652 A 5 ist eine Verbindungsanordnung eines mit einem Außenprofil versehenen, rohrförmigen Anschlußstutzens mit einem Anschlußstück bekannt. Die bekannte Verbindungsanordnung weist ein ringförmiges Zwischenstück auf, das an einem Ende einen seitlich auf den Anschlußstutzen geschobenen, über das Außenprofil formschlüssig greifenden Zug- und / oder Druckkräfte aufnehmenden Vorsprung und am anderen Ende eine Aufnahme für das Anschlußstück hat. Dazu ist die Aufnahme mit einem Innengewinde und das Anschlußstück mit einem entsprechend ausgebildeten Außengewinde versehen. Das Anschlußstück weist eine durchgehende Entlüftungsbohrung auf, die mittels einer Entlüftungsschraube verschließbar ist. An dem dem Anschlußstutzen zugewandten Ende des Anschlußstückes ist auf der zylindrischen Außenfläche eine Ringnut angebracht, in die ein mit der Innenwand einer vom Außenprofil nach außen sich erstreckenden zylindrischen Verlängerung des Anschlußstutzens tangierend zusammenwirkender Dichtring anordenbar ist. Nachteilig bei dieser Konstruktion ist, dass eine Abdichtung nur dann sichergestellt ist, wenn die Toleranzpaarung, lichte Weite der Verlängerung des Anschlußstutzens mit äußerem Durchmesser des Dichtringes im optimalen Bereich liegt. Ist beispielsweise die lichte Weite der Verlängerung des Anschlußstutzens zu groß und der Dichtring im Außendurchmesser zu klein, verbleibt ein Spalt, der eine Leckage verursacht.

Aus der US-A-4,452,070 ist ein Verfahren und eine Vorrichtung zum Testen von Drücken in einer Leitung oder einem Behälter bekannt, bei der ein Verschlusselement, das durch eine Gewindeverbindung mit dem Ende der zu prüfenden Leitung verbunden wird. D.h. am Ende der Leitung ist ein Innengewinde und am Verschlusselement ein entsprechendes Aussengewinde ausgebildet. Mit einer durch die in das Rohrende eingeschraubte Hülse führt eine hohle Zugstange, mit der ein Gummielement am Ende der Hülse axial zusammenpressbar ist. Das Zusammenpressen des Gummielementes erfolgt durch eine Mutter, die auf dem Ende der rohrförmigen Zugstange aufgesetzt ist. Um eine Dichtigkeit zu erlangen, muss einerseits das Gewinde abgedichtet werden und andererseits muss die Zugstange an beiden Enden mit Dichtungselementen versehen werden, die verhindern, dass ein Druckausgleich zwischen dem Rohrinnem und dem Rohräusseren durch den Ringraum zwischen der rohrförmigen Zugstange und der Hülse erfolgen kann. Beim Abpressen von hohen Drücken besteht daher die latente Gefahr, dass eine der Dichtungen nicht zuverlässig arbeitet.

Eine etwas anders gestaltete Vorrichtung zum Verschließen einer Rohrleitung ist aus der CH 687412 A 5 bekannt. Dieser Verschluß weist einen in einem mit einer Ringwulst versehenen Preßfitting einschiebbaren Dichtungskolbenträger auf, der an der dem Preßfitting abgewandten Seite mit einem radial nach außen sich erstreckenden Bund versehen ist. Dieser wirkt mit einem radial nach innen sich erstreckenden Kragen einer Befestigungshülse zusammen, die radial auf den Preßfitting aufschiebbar ist. Die Befestigungshülse liegt nach dem radialen Aufschieben über einen größer als 180° betragenden Umfangsbereich am Ringwulst des Preßfittings an. Der Dichtungskolbenträger ist mit einer Entlüftungsbohrung versehen, die mit einer Entlüftungsschraube verschließbar ist. Der zapfenartig ausgebildete Abschnitt des Dichtungskolbenträgers wirkt mit dem standardmäßig im Ringwulst des Preßfittings angeordneten Dichtring zusammen. Auch hierfür gelten die gleichen Anmerkungen wie zuvor. Nur bei optimaler Paarung der Toleranzen des zylindrischen Abschnittes des Dichtungskolbenträgers sowie des Innendurchmessers des Dichtringes ist eine Abdichtung gewährleistet.

Aufgabe der Erfindung ist es, eine Vorrichtung zum Verschließen einer Rohrleitung zur Durchführung einer Druckprüfung anzugeben, die unabhängig von der Toleranzpaarung Preßfitting/Verschlußelement eine sichere Abdichtung auch für höhere Drücke (< 10 bar) und größere Abmessungen (≥ 2 ") gewährleistet.

Diese Aufgabe wird ausgehend vom Oberbegriff in Verbindung mit den kennzeichnenden Merkmalen des Patentanspruches 1 gelöst. Vorteilhafte Ausgestaltungen sind Bestandteil von Unteransprüchen.

Mit dem erfindungsgemäß ausgebildeten Verschlußelement wird durch Drehen der Mutter der Dichtring zum Spreizen gezwungen, und zwar so, bis er sicher abdichtend an der Innenwand des zylindrischen Abschnittes des Preßfittings zur Anlage kommt. Im Gegensatz zu den bekannten Ausführungen kommt der Dichtring durch eine einstellbare Kompression unter Verspannung zur Anlage, so dass auch Gestaltabweichungen und ungünstige Toleranzpaarungen damit überbrückbar sind.

Um eine Verdrehsicherung zwischen Druckstück und Bolzen zu erreichen, kann beispielsweise in einem endseitig angeordneten radial nach außen sich erstreckenden Bund des Druckstückes eine radial verlaufende, durch den Bund sich erstreckende Bohrung angeordnet werden. In diese Bohrung wird eine Verdrehsicherung z. B. ein Stift eingetrieben und zwar so, dass das kopfseitige Ende in eine als Langloch ausgebildete Ausnehmung des Bolzens eingreift. Die Ausbildung als Langloch ist erforderlich, damit beim Drehen der Mutter Druckstück und Bolzen relativ zueinander sich bewegen können, um die gewünschte Spreizung des Dichtrings zu bewirken. Alternativ kann das Langloch auch im Druckstück angeordnet werden und der Stift wird in eine im Bolzen angebrachte Sacklochbohrung eingetrieben. Die Verdrehsicherung kann auch lösbar als Gewindestift ausgebildet sein, der in eine entsprechende Gewindebohrung einschraubbar ist. Die Absicherung des Verschlußelementes gegen axiales Herausdrücken erfolgt in bekannter Weise über eine radial auf den Preßfitting aufschiebbare Klammer oder Befestigungshülse. Die Befestigungshülse weist im Unterschied zur einfachen Klammer einen Innengewindeabschnitt auf, der mit einem auf dem Druckstück aufgebrachten Außengewindeabschnitt zusammenwirkt. Die Klammer dagegen weist ein Zapfenelement auf, das in eine ringförmige Ausnehmung des Druckstückes einschiebbar ist. Die Anordnung der Befestigungshülse bzw. der Klammer hat noch den zusätzlichen Vorteil, dass diese als Gegenhaltekraft zum aufgespreizten Dichtring wirken, so dass der im Abdichtbereich liegende zylindrische Abschnitt des Preßfittings nicht in unzulässiger Weise verformt wird. Für sehr hohe Prüfdrücke und große Abmessungen hat es sich als vorteilhaft herausgestellt, das Sicherungselement gegen axiales Herausdrücken des Verschlußelementes als Schelle mit zwei miteinander verbindbaren Halbschalen auszubilden. Die Halbschalen weisen eine Innenkontur auf, die der im Abdichtbereich des Preßfittings ausgebildete Außenkontur entspricht. Die eigentliche Sicherung erfolgt über einen eingangsseitig angeordneten radial nach innen sich erstreckenden Kragen, so dass im Falle eines Versagens die Mutter an der Innenseite des Kragens zur Anlage kommt und ein Herausdrücken des Verschlußelementes verhindert. Die Verbindung der beiden Halbschalen kann über Schrauben oder ein Gelenk oder über eine aufschiebbare Hülse erfolgen, wobei letztere zusätzlich axial gesichert wird.

In der Zeichnung wird anhand mehrerer Ausführungsbeispiele die erfindungsgemäße Vorrichtung näher erläutert. Es zeigen:
- Figur 1: in einem Längsschnitt eine erste Ausführungsform einer erfindungsgemäßen Vorrichtung zum Verschließen einer Rohrleitung
- Figur 2: den Bolzen im Detail
- Figur 3: die Entlüftungsschraube im Detail
- Figur 4: das Druckstück im Detail
- Figur 5: die Mutter im Detail
- Figur 6: die Klammer im Detail
- Figur 7: eine Ansicht von Figur 6
- Figur 8: in einem Längsschnitt eine zweite Ausführungsform einer erfindungsgemäßen Vorrichtung zum Verschließen einer Rohrleitung
- Figur 9: den Bolzen der zweiten Ausführungsform im Detail
- Figur 10: das Druckstück der zweiten Ausführungsform im Detail
- Figur 11: die Befestigungshülse im Detail
- Figur 12: eine Ansicht von Figur 11
- Figur 13: in einem Längsschnitt eine dritte Ausführungsform einer erfindungsgemäßen Vorrichtung zum Verschließen einer Rohrleitung
- Figur 14: halbseitig einen Schnitt in Richtung A-A in Figur 13 und halbseitig eine Ansicht
- Figur 15: eine Variante gemäß Figur 13
- Figur 16: einen Schnitt in Richtung A-A in Figur 15
- Figur 17: eine Variante gemäß Figur 1
- Figur 18: eine Ansicht in Richtung X in Figur 17

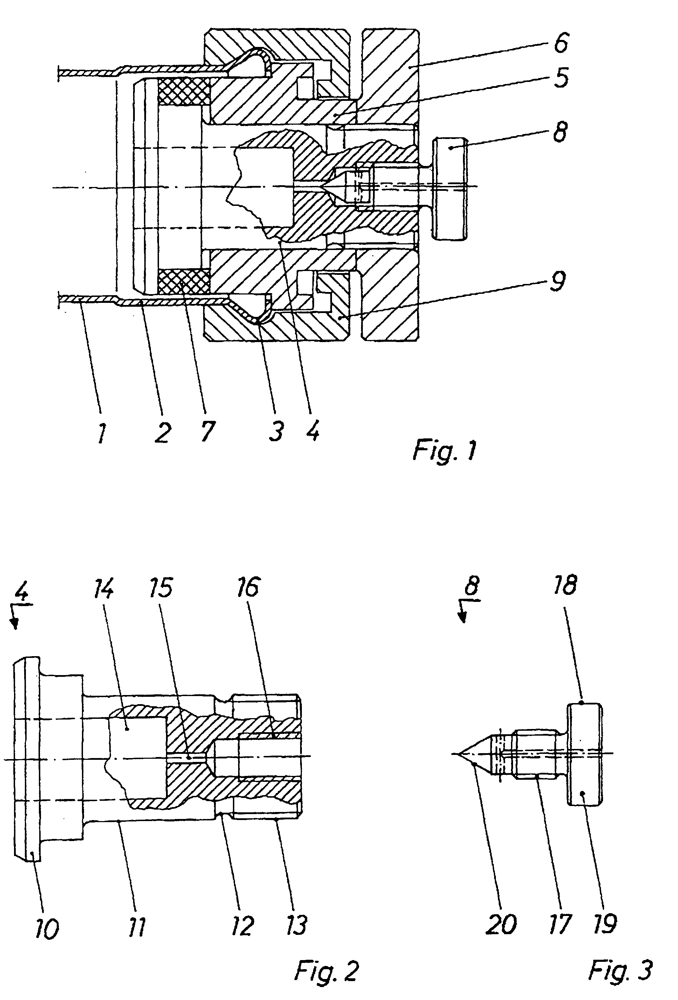

In Figur 1 ist in einem Längsschnitt eine erfindungsgemäß ausgebildete Vorrichtung zum Verschließen einer Rohrleitung für die Durchführung einer Druckprüfung dargestellt. Am offenen Ende einer hier nicht dargestellten Rohrleitung ist ein Preßfitting 1 angeordnet, der zumindest auf einer Seite einen zylindrischen Abschnitt 2 und anschließend daran einen Ringwulst 3 aufweist. In diesem Ringwulst 3 ist bei Anschluss einer weiterführenden Leitung eine Dichtung angeordnet.

Die erfindungsgemäße Vorrichtung weist folgende Elemente auf: Einen Bolzen 4, auf dem axial verschiebbar ein Druckstück 5 angeordnet ist, das mit einer auf dem Bolzen 4 aufschraubbaren Mutter 6 zusammenwirkt. Die Abdichtung erfolgt über einen auf dem Bolzen 4 angeordneten Dichtring 7 und die Entlüftung über eine in den Bolzen 4 einschraubbare Entlüftungsschraube 8. Der Dichtring 7 ist in diesem Ausführungsbeispiel als Flachring ausgebildet. Zusätzlich kann eine radial auf dem Preßfitting 1 aufschiebbare Klammer 9 vorgesehen sein. Die Einzelheiten werden in den nachfolgenden Figuren 2 - 7 erläutert.

Der in Figur 2 dargestellte Bolzen 4 weist stirnseitig einen Bund 10 auf, an dem der Dichtring 7 axial zur Anlage kommt. Mit einem Absatz schließt sich ein zylindrisch ausgebildeter Abschnitt 11 an, auf dem das Druckstück 5 axial verschiebbar anordenbar ist. Getrennt durch eine Nut 12 schließt sich an den zylindrischen Abschnitt 11 ein Gewindeabschnitt 13 an. Auf diesen ist die Mutter 6 aufschraubbar. Der Bolzen 4 weist eine Entlüftungsbohrung 14 auf, die übergeht in einen Kanal 15 und eine daran anschließende Gewindebohrung 16. In die letztgenannte Gewindebohrung 16 ist die in Figur 3 dargestellte Entlüftungsschraube 8 einschraubbar. Dazu weist die Entlüftungsschraube einen Außengewindeabschnitt 17 und zum Drehen einen mit einer Rändelung 18 versehenen Bund 19 auf. Das andere Ende ist als Kegel 20 ausgebildet, der mit dem Kanal 15 des Bolzens 4 verschließend zusammenwirkt.

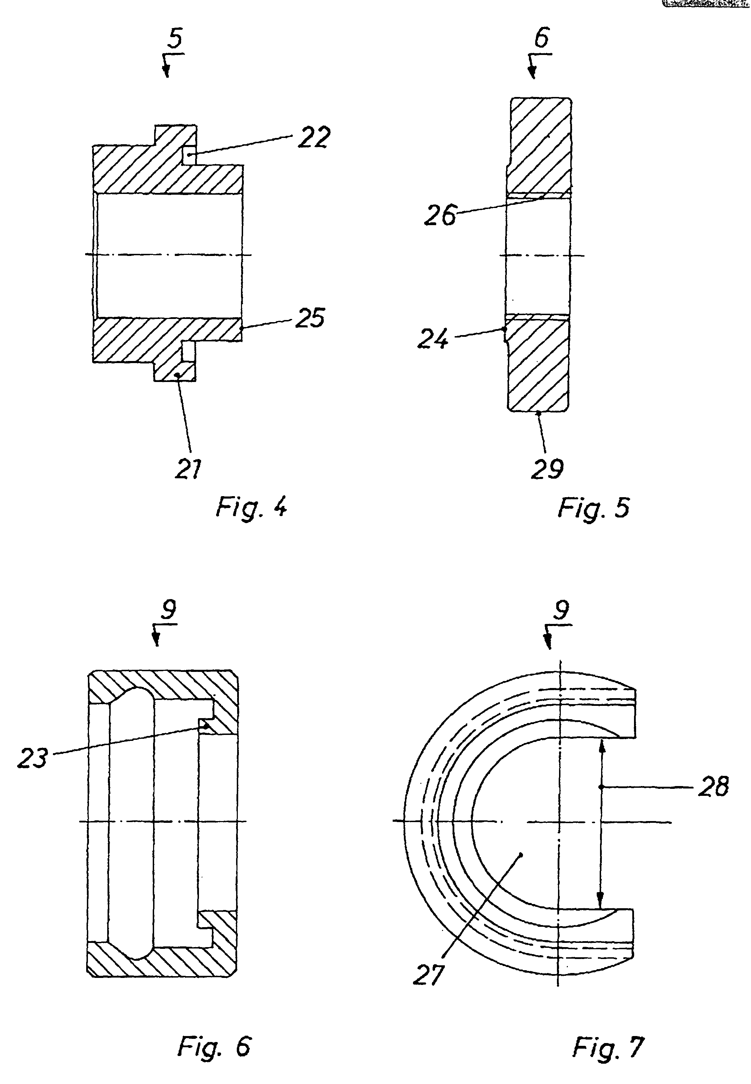

Das in Figur 4 dargestellte Druckstück 5 ist als ein im wesentlichen zylindrischer Hohlkörper ausgebildet mit einem nach außen sich erstreckenden Kragen 21. Dieser Kragen 21 kommt an der Stirnseite des Ringwulstes 3 des Preßfittings 1 zur Anlage. Auf der dem Preßfitting 1 abgewandten Seite ist am Druckstück 5 eine ringförmige Ausnehmung 22 vorgesehen, in die ein entsprechend ausgebildetes Zapfenelement 23 der Klammer 9 einschiebbar ist.

Die in Figur 5 dargestellte Mutter 6 weist auf der dem Druckstück 5 zugewandten Seite eine Fase 24 auf, die dem stirnseitigen Bereich 25 des Druckstückes 5 angepasst ist. Zum Aufschrauben auf den Gewindeabschnitt 13 des Bolzens 4 ist die Mutter 6 mit einer entsprechend ausgebildeten Gewindebohrung 26 versehen. Zum Drehen der Mutter 6 ist der Mantelbereich der Mutter mit einer Rändelung 29 versehen.

Die in den Figuren 6 und 7 dargestellte Klammer 9 weist eine Innenkontur auf, die der Außenkontur des Preßfittings 1 angepasst ist. Umfangsmäßig ist die Klammer 9 über einen bestimmten Bereich abgeschnitten und bildet ein Maul 27, dessen lichte Weite 28 immer etwas größer ist als die entsprechende Außenkontur des Preßfittings 1 bzw. des Druckstückes 5.

Bezogen auf alle zuvor erläuterten Figuren, aber insbesondere auf Figur 1, erfolgt das Verschließen einer Rohrleitung mit folgenden Verfahrensschritten. In den das Ende der Rohrleitung bildenden Preßfitting 1 wird der Bolzen 4 zusammen mit dem darauf angeordneten Dichtring 7 und dem Druckstück 5 sowie der lose aufgeschraubten Mutter 6 eingeschoben, bis der Kragen 21 des Druckstückes 5 an der Stirnseite des Ringwulstes 3 des Preßfittings 1 zur Anlage kommt. Hält man das Druckstück 5 mit der Hand fest und drückt es gegen den Ringwulst 3 des Preßfittings 1, dann wird durch Drehen der Mutter 6 der Bund 10 des Bolzens 4 an das Druckstück 5 herangezogen und der dazwischenliegende Dichtring 7 gespreizt. Das Drehen der Mutter 6 wird solange fortgeführt, bis die Außenfläche des Dichtringes 7 an der Innenwand des zylindrischen Abschnittes 2 des Preßfittings 1 zur Anlage kommt. Durch weiteres Drehen kann eine Vorspannung im Dichtring 7 erzeugt werden, so dass eine sichere Abdichtung gewährleistet ist. Nach Befüllen der Leitung und entsprechender Entlüftung wird die Entlüftungsschraube 8 in den Bolzen 4 eingeschraubt, bis der Kegel 20 abdichtend zur Anlage kommt. Danach wird die Druckprobe durchgeführt. Zur Erleichterung der Handhabung sowie zur Absicherung in bezug auf axiales Herausdrücken kann zusätzlich noch eine radial auf den Preßfitting 1 aufschiebbare Klammer 9 verwendet werden. Nach dem Einschieben des Bolzens 4 in den Preßfitting 1 und Aufschieben der Klammer 9, wird der Bolzen 4 von Hand axial zurückbewegt, bis die Ringnut 22 des Druckstückes 5 und das Zapfenelement 23 der Klammer 9 ineinandergeschoben sind. Dies erzeugt dann die notwendige Verdrehsicherung. so dass anschließend, wie schon zuvor erläutert, die Mutter 6 zum Spreizen des Dichtringes 7 gedreht werden kann.

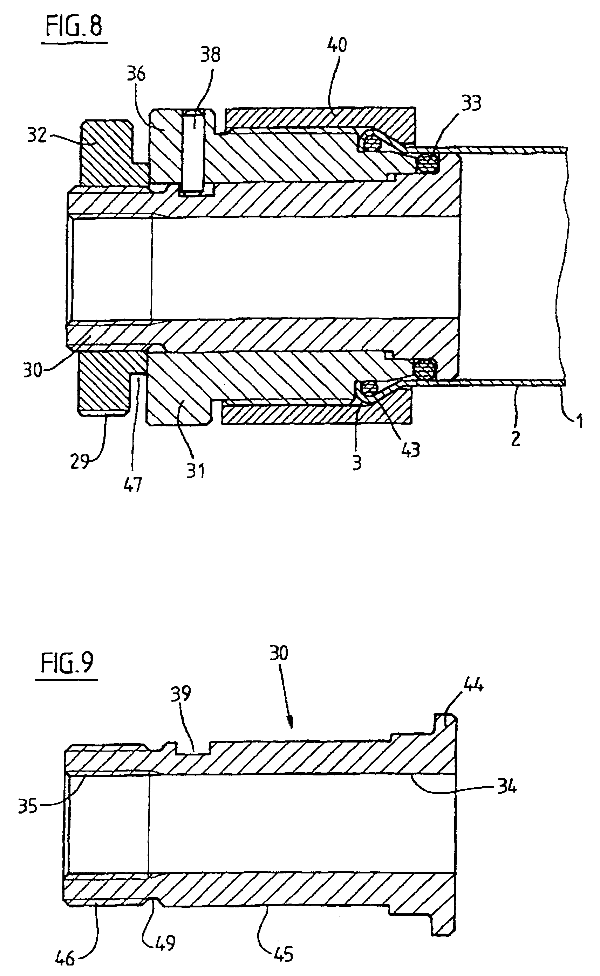

In Figur 8 ist in einem Längsschnitt eine zweite Ausführungsform dargestellt. Dabei sind für gleiche Teile gleiche Bezugszeichen wie in Figur 1 gewählt worden. Die erfindungsgemäß ausgebildete Verschlussvorrichtung weist folgende Elemente auf. Einen Bolzen 30, auf dem axial verschiebbar ein Druckstück 31 angeordnet ist, das mit einer auf dem Bolzen 30 aufschraubbaren Mutter 32 zusammenwirkt. Die Abdichtung erfolgt über einen auf dem Bolzen 30 angeordneten Dichtring 33, der in diesem Ausführungsbeispiel als Rundring ausgebildet ist. Zusätzlich kann als axiale Sicherung eine radial auf den Preßfitting 1 aufschiebbare Befestigungshülse 40 vorgesehen sein. Die Einzelheiten werden in den nachfolgenden Figuren 9 - 12 erläutert.

Der in Figur 9 dargestellte Bolzen 30 weist stirnseitig einen Bund 44 auf, an dem der Dichtring 33 zur Anlage kommt. Mit einem Absatz schließt sich ein zylindrisch ausgebildeter Abschnitt 45 an, auf dem der Druckstutzen 31 axial verschiebbar anordenbar ist. Getrennt durch eine Nut 49 schließt sich an den zylindrischen Abschnitt 45 ein Gewindeabschnitt 46 an. Auf diesem ist die mit einer Rändelung 29 versehene Mutter 32 aufschraubbar.

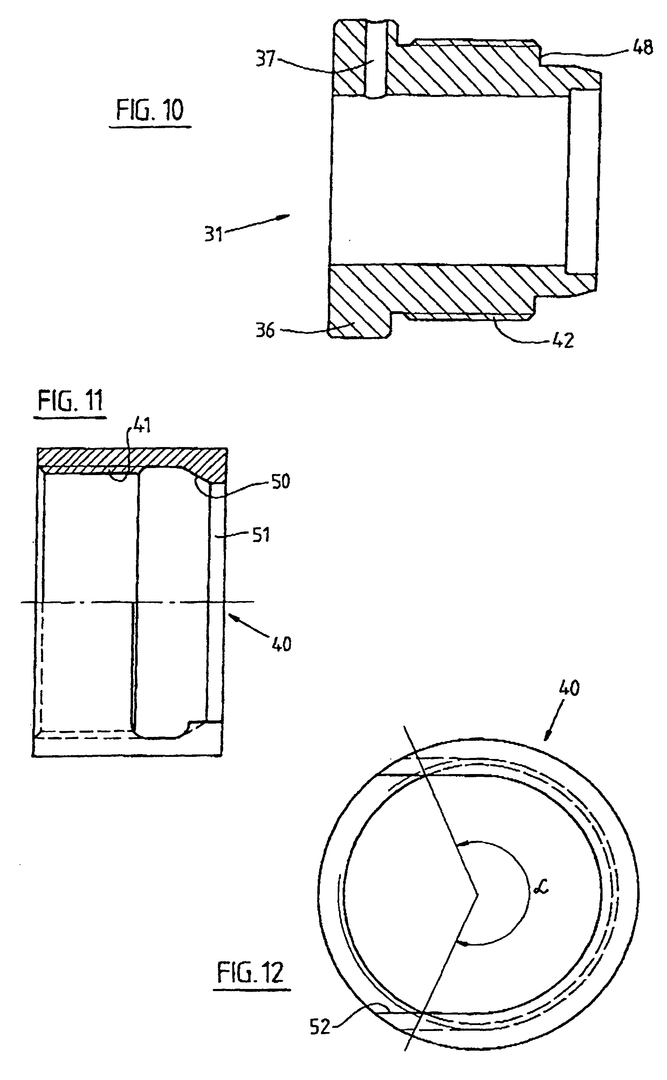

Die Entlüftung erfolgt über eine durch den Bolzen 30 sich erstreckende Bohrung 34. Diese Bohrung weist eingangsseitig einen Gewindeabschnitt 35 auf, in das eine hier nicht dargestellte Anschlussleitung einschraubbar ist. Der große Querschnitt der Bohrung 34 wurde bewusst gewählt, um auf diese Weise die zu prüfende Rohrleitung rasch befüllen zu können. Die erforderliche Be- und Entlüftung wird üblicherweise als Abzweig in der Anschlussleitung angeordnet. Im Unterschied zur in Figur 1 dargestellten Ausführungsform ist das Druckstück 31 verdrehgesichert auf dem Bolzen 30 angeordnet. Dazu weist das Druckstück 31 (Figur 10) endseitig einen radial nach außen sich erstreckenden Bund 36 auf. Radial durch diesen Bund 36 erstreckt sich eine Bohrung 37, durch die eine Verdrehsicherung, hier z. B. ein Stift 38 (Figur 8) einsteckbar ist. Das kopfseitige Ende des Stiftes 38 greift zur Verdrehsicherung in eine im Bolzen 30 angeordnete als Langloch ausgebildete Ausnehmung 39 (Figur 9) ein. Die Länge des Langloches entspricht dabei dem erforderlichen relativen Verschiebeweg zwischen Bolzen 30 und Druckstück 31, um den Dichtring 33 entsprechend zu spreizen. Um das Verschlusselement beim Abpressen vor dem Herausdrücken abzusichern, ist in bekannter Weise eine radial auf den Preßfitting 1 aufschiebbare Befestigungshülse 40 vorgesehen. Diese weist einen Innengewindeabschnitt 41 auf, der mit einem auf dem Druckstück 31 angeordneten Außengewindeabschnitt 42 zusammenwirkt. Beim Zusammenschrauben von Druckstück 31 und Befestigungshülse 40 wirkt der am Druckstück 31 angeordnete Absatz 48 (Figur 10) als Anschlag, so dass das Druckstück 31 an der Stirnseite des Ringwulstes 3 des Preßfittings 1 zur Anlage kommt. Der standardmäßig im Ringwulst 3 des Preßfittings 1 angeordnete Dichtring 43 kann zusätzlich als Abdichtung genutzt werden, letztendlich ist aber der auf dem Druckstück 31 angeordnete Dichtring 33 für die Abdichtung maßgeblich.

Die in den Figuren 11 und 12 dargestellte Befestigungshülse 40 weist eine Innenkontur auf, die der Außenkontur des Preßfittings 1 angepaßt ist. Dies gilt zum einen für die Abschrägung 50 und für das Maß der Bohrung 51, die etwas größer ist als der Außendurchmesser des zylindrischen Abschnittes 2 des Preßfittings 1. Umfangsmäßig ist die Befestigungshülse 40 im gewindefreien Abschnitt über einen bestimmten Bereich abgeschnitten und bildet ein Maul 52, dessen lichte Weite immer etwas größer ist als die entsprechende Außenkontur des Preßfittings 1.

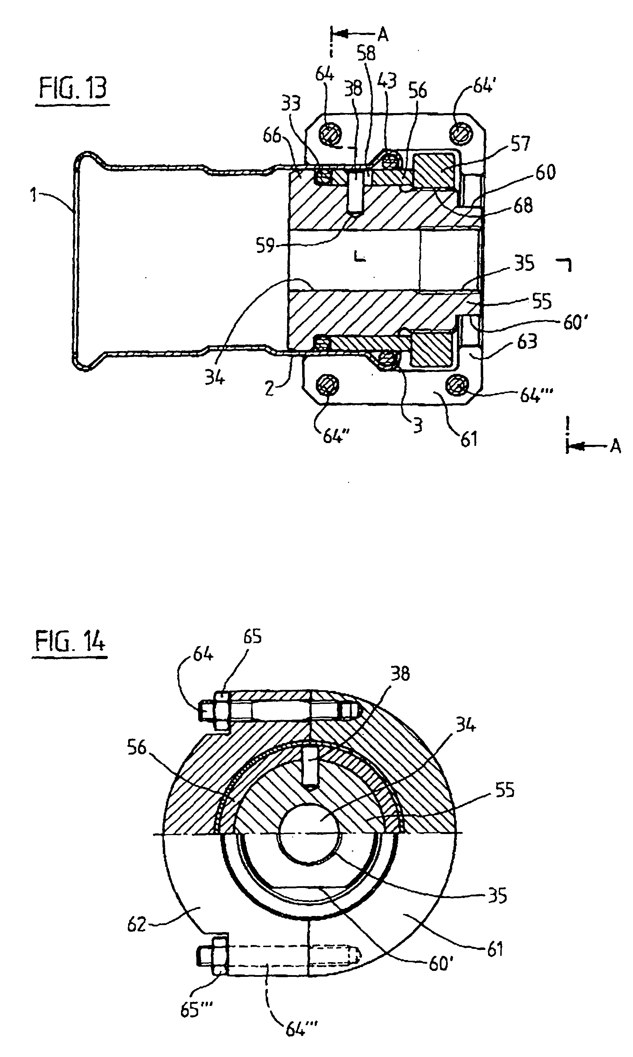

In Figur 13 ist in einem Längsschnitt und in Figur 14 in einem halbseitigen Querschnitt und einer halbseitigen Ansicht eine dritte Ausführungsform dargestellt. Dabei sind für gleiche Teile gleiche Bezugszeichen wie in Figur 1 gewählt worden. Die erfindungsgemäß ausgebildete Verschlußvorrichtung weist folgende Elemente auf. Einen Bolzen 55, auf dem axial verschiebbar ein Druckstück 56 angeordnet ist, das mit einer auf dem Bolzen 55 aufschraubbaren Mutter 57 zusammenwirkt. Dazu ist auf dem Bolzen 55 auf dem dem Preßfitting 1 abgewandten Endbereich ein Gewindeabschnitt 68 angeordnet. Die Abdichtung erfolgt, wie in den Figuren 1 und 8 schon erläutert, über einen auf dem Bolzen 55 angeordneten Dichtring 33, der auch in diesem Ausführungsbeispiel als Rundring ausgebildet ist. Der Bolzen 55 weist stirnseitig einen Bund 66 auf, an dem der Dichtring 33 axial zur Anlage kommt. Die Verdrehsicherung ist im Unterschied zu Figur 8 etwas anders gestaltet. Im Druckstück 56 ist ein Langloch 58 angeordnet und korrespondierend dazu im Bolzen 55 eine Sacklochbohrung 59. In diese Sacklochbohrung 59 ist ein Stift 38 eingetrieben, dessen fußseitiges Ende in das Langloch 58 hineinragt. Um beim Verdrehen der Mutter 57 zur Spreizung des Dichtringes 33 eine entsprechende Gegenkraft aufbauen zu können, weist der Bolzen 55 auf dem dem Preßfitting 1 abgewandten Ende zwei Abflachungen 60, 60' auf, um einen Maulschlüssel aufstecken zu können.

Als Sicherung gegen ein axiales Herausdrücken des Verschlußelementes ist eine aus zwei Halbschalen 61, 62 bestehende Schelle vorgesehen. Die beiden Halbschalen 61, 62 weisen eine Innenkontur auf, die der Außenkontur des Preßfittings 1 im Abdichtbereich angepaßt ist sowie einen an einem Ende radial nach innen sich erstreckenden Kragen 63, der so bemessen ist, dass er als Anschlag für die Mutter 57 dient, falls das Verschlußelement herausgedrückt werden sollte. Die Verbindung der beiden Halbschalen 61, 62 erfolgt über Gewindebolzen 64, 64', 64", 64"', auf die Muttern 65 - 65"' aufschraubbar sind. Alternativ kann man die beiden Halbschalen 61, 62 gelenkartig miteinander verbinden und durch einen Hakenverschluß sichern. Die Ausbildung der axialen Sicherung als Schelle ist insbesondere für große Abmessungen (≥ 2 ") gedacht, bei denen bedingt durch die große Stirnfläche des Verschlußelementes die Kräfte dementsprechend hoch sind. Außerdem werden die Leitungen meistens mit höheren Prüfdrücken abgedrückt als Leitungen mit kleinem Querschnitt.

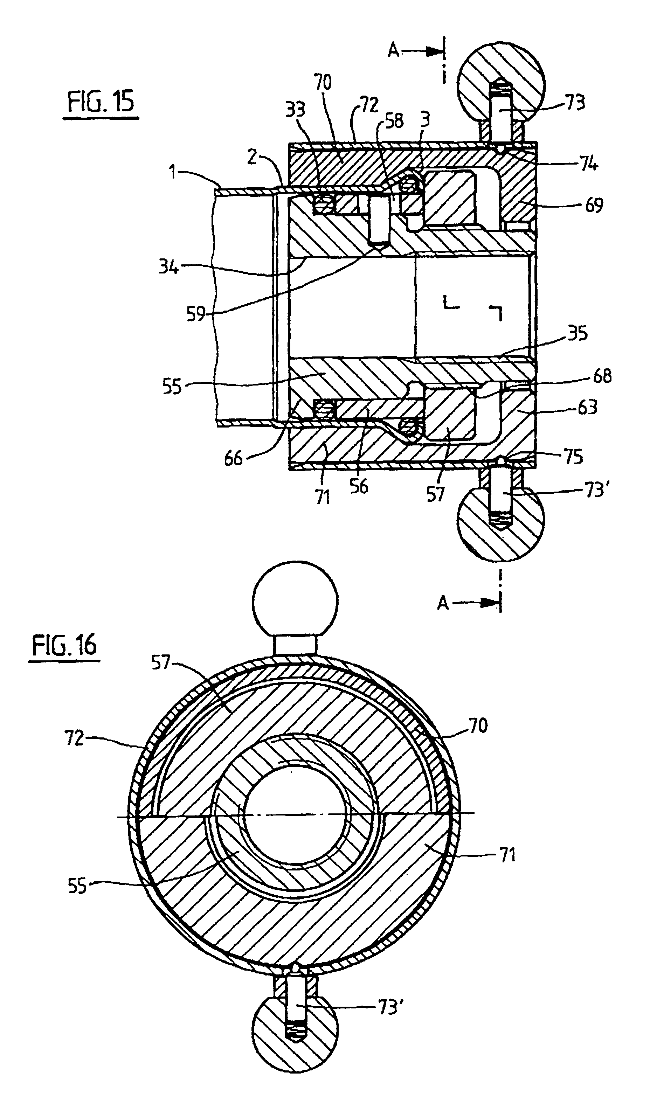

In den Figuren 15, 16 ist eine Variante der Ausführungsform gemäß den Figuren 13, 14 dargestellt. Dabei sind für gleiche Teile gleiche Bezugszeichen gewählt worden. Im Unterschied zur vorgehend erläuterten Ausführungsform werden in Schließstellung die beiden Halbschalen 70, 71 nicht durch Schrauben und entsprechende Gewindebohrungen, sondern über eine aufschiebbare Hülse 72 gesichert. Damit beim Abdrücken die Hülse 72 nicht versehentlich weggeschoben werden kann, wird diese gegenüber den Halbschalen 70, 71 axial fixiert. Beispielsweise kann dies ein Schnappverschluß sein, bei dem mindestens ein radial verschiebbarer Bolzen 73, 73' mit seiner Spitze in eine auf jeder Halbschale 70, 71 angeordnete ringförmige Ausnehmung 74, 75 eingreifen kann. Der hier dargestellte Schnappverschluß ist nur ein Beispiel für eine Axialsicherung der Hülse 72. Andere Arten einer Axialsicherung sind vorstellbar und praktikabel.

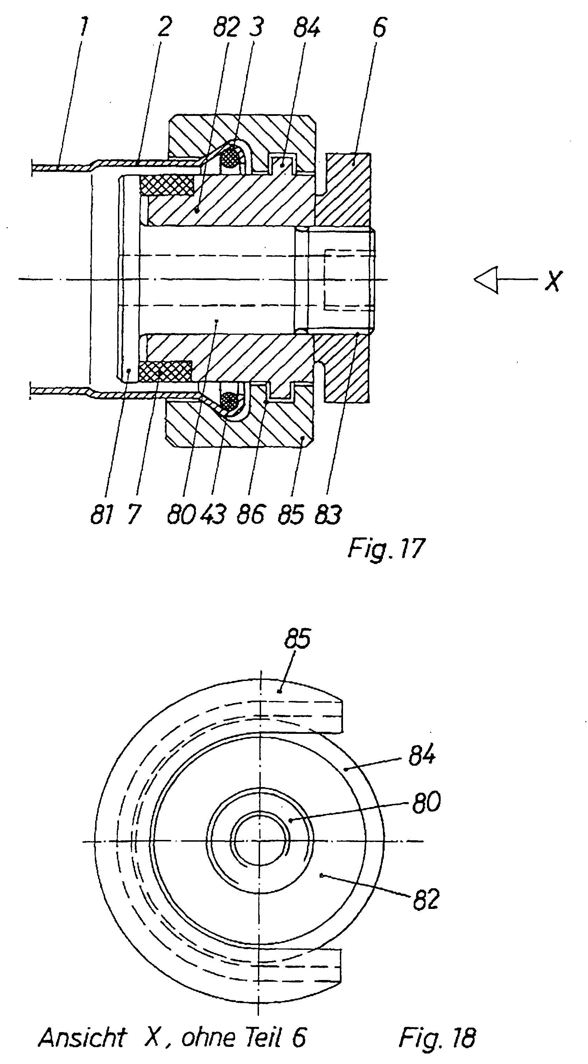

Figur 17, 18 zeigt eine weitere Ausführungsform, die eine Variante zu der in Figur 1 dargestellten Konstruktion ist. Auch hier werden für gleiche Teile gleiche Bezugszeichen verwendet. Das Verschlußsystem besteht wie schon zuvor beschrieben aus einem Bolzen 80, der stirnseitig einen Bund 81 aufweist, an dem der Dichtring 7 axial zur Anlage kommt. Erreicht wird dies durch ein Druckstück 82, das axial mittels der Mutter 6 auf dem zylindrischen Abschnitt des Bolzens 80 verschiebbar angeordnet ist. Der Bolzen 80 weist dazu auf dem dem Preßfitting 1 abgewandten Endbereich einen Gewindeabschnitt 83 auf. Zum Befüllen der Leitung ist der Bolzen 80 mit einer Bohrung versehen. Im Unterschied zu Figur 1 ist das Druckstück 82 im Endbereich mit einem nach außen sich erstreckenden Kragen 84 versehen. Über diesen Kragen 84 ist eine radial auf den Preßfitting 1 aufschiebbare Klammer 85 schiebbar. Diese Klammer 85 weist eine komplementär zum Kragen 84 ausgebildete ringförmige Ausnehmung 86 auf. Die Klammer 85 ist mit einer Innenkontur versehen, die der Außenkontur des Preßfittings 1 angepaßt ist. Umfangsmäßig ist die Klammer 85 über einem bestimmten Bereich abgeschnitten und bildet ein Maul, dessen lichte Weite immer etwas größer ist als die entsprechende Außenkontur des Preßfittings 1 bzw. des Druckstückes 82.

## Patentansprüche

1. Vorrichtung zum Verschliessen einer Rohrleitung zur Durchführung einer Druckprüfung mit einem am offenen Ende eines Rohres auf diesen aufsetzbar und damit verbindbaren Pressfitting (1), der zumindest auf der offenen Seite einen zylindrischen Abschnitt (2) und daran anschliessend einen den Stirnseitenbereich bildenden Ringwulst (3) aufweist und mit einem am offenen Ende des Pressfittings (1) anordenbaren Verschlusselement (4,5,8), auf dessen dem Pressfitting (1) zugewandten Endbereich ein mit der Innenseite des Pressfittings (1) zusammenwirkender Dichtring (7) angeordnet ist und das eine durch sich erstreckende Entlüftungs-Bohrung (14) aufweist,
**dadurch gekennzeichnet**,
a) dass das Verschlusselement aus einem Bolzen (4, 30, 55, 80),
b) einem darauf angeordneten Druckstück (5, 31, 56, 82) und einer Mutter (6, 32, 57) besteht, wobei
c) der Bolzen (4,30,55,80) einen stirnseitigen Bund (10, 44, 66, 81) als Anlage für den Dichtring (7, 33),
d) einen zylindrischen Abschnitt (11, 45, 67) zur Anordnung des axial darauf verschiebbaren Druckstückes (5,31,56,82) und
e) einen vom zylindrischen Abschnitt (11,45,67) getrennt angeordneten endseitigen Gewindeabschnitt (13, 46, 68, 83) zur Aufnahme der Mutter (6,32,57)
f) sowie die durch ihn sich erstreckende Entlüftungs-Bohrung (14, 34) aufweist.

2. Vorrichtung nach Anspruch 1,
**dadurch gekennzeichnet,**
**dass** die Masse des Dichtringes (7,33) und der relative Verschlebeweg zwischen Bolzen (4, 30, 55, 80) und Druckstück (5, 31, 56, 82) so bemessen sind, dass vor Erreichen der Endlage der Dichtring (7,33) an der Innenwand des zylindrischen Abschnittes (2) des Pressfittings (1) unter einstellbarer Kompression abdichtend zur Anlage kommt.

3. Vorrichtung nach den Ansprüchen 1 und 2,
**dadurch gekennzeichnet,**
**dass** die Mutter (6, 32) mit einer Fase (24,47) und auf dem Mantel mit einer Rändelung (29) versehen ist.

4. Vorrichtung nach einem der Ansprüche 1 - 3,
**dadurch gekennzeichnet,**
**dass** das Druckstück (5, 31) einen radial nach außen sich erstreckenden Absatz (21, 48) aufweist, der an der Stirnseite des Ringwulstes (3) des Preßfittings (1) zur Anlage kommt.

5. Vorrichtung nach einem der Ansprüche 1 - 4,
**dadurch gekennzeichnet,**
**dass** das Druckstück (5) auf der dem Preßfitting (1) abgewandten Seite mit einer ringförmigen Ausnehmung (22) versehen ist, in die ein Zapfenelement (23) einer radial auf den Preßfitting (1) aufschiebbaren Klammer (9) einschiebbar ist, wobei die Klammer (9) axial bis zum zylindrischen Abschnitt (2) des Preßfittings (1) sich erstreckt.

6. Vorrichtung nach einem der Ansprüche 1 - 4,
**dadurch gekennzeichnet,**
**dass** das Druckstück (31) auf der dem Preßfitting (1) abgewandten Seite einen Außengewindeabschnitt (42) aufweist, der in einen Innengewindeabschnitt (41) einer radial auf den Preßfitting (1) aufschiebbaren Befestigungshülse (40) einschraubbar ist, wobei die Befestigungshülse (40) axial bis zum zylindrischen Abschnitt (2) des Preßfittings (1) sich erstreckt.

7. Vorrichtung nach Anspruch 6,
**dadurch gekennzeichnet,**
**dass** das Druckstück (31) außenendseitig einen radial nach außen sich erstreckenden Bund (36) aufweist, in dem eine radial durch den Bund (36) sich erstreckende Bohrung (37) angeordnet ist, in die eine Verdrehsicherung (38) einsteckbar ist, die in eine im Bolzen (30) als Langloch ausgebildete angeordnete Ausnehmung (39) eingreift.

8. Vorrichtung nach Anspruch 1 und 2,
**dadurch gekennzeichnet,**
**dass** das Druckstück (56) eine als Langloch ausgebildete Öffnung (58) aufweist, durch die eine Verdrehsicherung (38) in eine im Bolzen (55) angeordnete Sacklochbohrung (59) einsteckbar ist.

9. Vorrichtung nach Anspruch 1,
**dadurch gekennzeichnet,**
**dass** die Bohrung (34) durchgehend einen großen Querschnitt aufweist und eingangsseitig mit einem Gewindeabschnitt (35) versehen ist.

10. Vorrichtung nach Anspruch 1,
**dadurch gekennzeichnet,**
**dass** an die Bohrung (14) sich ein verengender Kanal (15) anschließt, der dann übergeht in einen einen größeren Querschnitt aufweisenden Gewindeabschnitt (16), in den eine Entlüftungsschraube (8) einschraubbar ist.

11. Vorrichtung nach Anspruch 1,
**dadurch gekennzeichnet,**
**dass** zur Sicherung gegen axiales Herausdrücken des Verschlußelementes eine aus zwei Halbschalen (61, 62) bestehende Schelle vorgesehen ist, die eine der Außenkontur des Abdichtbereiches des Preßfittings (1) angepaßte Innenkontur aufweist und eingangsseitig mit einem radial nach innen sich erstreckenden Kragen (63) versehen ist.

12. Vorrichtung nach Anspruch 11,
**dadurch gekennzeichnet,**
**dass** in einer Halbschale (61) mindestens zwei Gewindebolzen (64) eingeschraubt sind, die sich durch entsprechend in der anderen Halbschale (62) angeordnete Bohrungen erstrecken und auf die Muttern (65) aufschraubbar sind.

13. Vorrichtung nach Anspruch 11,
**dadurch gekennzeichnet,**
**dass** die beiden Halbschalen (61, 62) gelenkig miteinander verbunden und mit einem Verschließmittel in der geschlossenen Stellung fixierbar sind.

14. Vorrichtung nach Anspruch 11,
**dadurch gekennzeichnet,**
**dass** in Schließstellung auf die beiden Halbschalen (70, 71) eine Hülse (72) aufschiebbar ist.

15. Vorrichtung nach Anspruch 14,
**dadurch gekennzeichnet,**
**dass** die Hülse (72) gegenüber den Halbschalen (70, 71) axial fixierbar ist.

16. Vorrichtung nach einem der Ansprüche 1 - 3,
**dadurch gekennzeichnet,**
**dass** das Druckstück (82) im dem Preßfitting (1) abgewandten Endbereich einen nach außen sich erstreckenden Kragen (84) aufweist, über den eine radial auf den Preßfitting (1) aufschiebbare Klammer (85) schiebbar ist, die eine zum Kragen (85) komplementär ausgebildete ringförmige Ausnehmung (86) aufweist und sich axial bis zum zylindrischen Abschnitt (2) des Preßfittings (1) erstreckt.

## Claims

1. Device for closing off a pipe to carry out a pressure test, said device having at the open end of a pipe a press fitting (1) which may be placed on said pipe and connected thereto and which has, at least on the open side, a cylindrical portion (2) and adjoining same an annular bead (3) which forms the end region, and the device having a closure element (4,5,8) which may be arranged at the open end of the press fitting (1) and on the end region of which, facing the press fitting (1), is arranged a sealing ring (7) which cooperates with the inner side of the press fitting (1) and which has a ventilation bore (14) extending through it,
**characterised in that**
a) the closure element comprises a pin (4,30,55,80),
b) a thrust piece (5,31,56,82) arranged upon same and a nut (6,32,57),
c) the pin (4,30,55,80) having an end collar (10,44,66,81) on which the sealing ring (7,33) rests,
d) a cylindrical portion (11,45,67) on which is arranged the thrust piece (5,31,56,82) so as to be axially displaceable on it, and
e) an end threaded portion (13, 46, 68, 83) for receiving the nut (6,32,57) and arranged separately from the cylindrical portion (11,45,67),
f) as well as the ventilation bore (14,34) extending through it.

2. Device according to claim 1, **characterised in that** the mass of the sealing ring (7,33) and the relative displacement path between pin (4,30,55,80) and thrust piece (5,31,56,82) are of such dimensions that, before reaching the end position, the sealing ring (7,33) comes to rest in a sealing manner against the inner wall of the cylindrical portion (2) of the press fitting (1) with adjustable compression.

3. Device according to claims 1 and 2, **characterised in that** the nut (6,32) is provided with a bevel (24,47) and on the casing with a knurl (29).

4. Device according to one of claims 1-3, **characterised in that** the thrust piece (5,31) has a shoulder (21,48) which extends radially outwards and comes to rest against the end face of the annular bead (3) of the press fitting (1).

5. Device according to one of claims 1-4, **characterised in that** the thrust piece (5) is provided, on the side remote from the press fitting (1), with an annular recess (22) into which may be pushed a peg element (23) of a clamp (9) which may be pushed radially onto the press fitting (1), the clamp (9) extending axially as far as the cylindrical portion (2) of the press fitting (1).

6. Device according to one of claims 1-4, **characterised in that** the thrust piece (31) has, on the side remote from the press fitting (1), an externally threaded portion (42) which may be screwed into an internally threaded portion (41) of a fastening sleeve (40) which may be pushed onto the press fitting (1), the fastening sleeve (40) extending axially as far as the cylindrical portion (2) of the press fitting (1).

7. Device according to claim 6, **characterised in that** the thrust piece (31) has at its outer end a collar (36) which extends radially outwards and in which a bore (37) is arranged which extends radially through the collar (36) and into which an anti-rotation element (38) may be inserted, which engages in a recess (39) in the form of an elongated hole arranged in the pin (30).

8. Device according to claim 1 and 2, **characterised in that** the thrust piece (56) has an aperture (58) in the form of an elongated hole and through which an anti-rotation element (38) may be inserted in a blind hole bore (59) arranged in the pin (55).

9. Device according to claim 1, **characterised in that** the bore (34) has a continuously large cross-section and is provided with a threaded portion (35) on the entry side.

10. Device according to claim 1, **characterised in that** communicating with the bore (14) is a narrowing channel (15) which then merges into a threaded portion (16) which has a larger cross-section and into which a vent screw (8) may be screwed.

11. Device according to claim 1, **characterised in that**, to secure against the closure element being pressed out axially, a clip comprising two half-shells (61,62) is provided which has an inner contour matched to the outer contour of the sealing region of the press fitting (1) and is provided at the entry side with a collar (63) extending radially inwards.

12. Device according to claim 11, **characterised in that** at least two threaded bolts (64) are screwed into one half-shell (61), said bolts extending through bores appropriately arranged in the other half-shell (62) and able to be screwed onto the nuts (65).

13. Device according to claim 11, **characterised in that** the two half-shells (61,62) are hinged together and may be fixed in the closed position using a closing means.

14. Device according to claim 11, **characterised in that**, in the closing position, a sleeve (72) may be pushed onto the two half-shells (70,71).

15. Device according to claim 14, **characterised in that** the sleeve (72) may be fixed axially relative to the half-shells (70,71).

16. Device according to one of claims 1-3, **characterised in that** the thrust piece (82), in the end region remote from the press fitting (1), has an outwardly extending collar (84) over which may be pushed a clamp (85) which may be pushed radially onto the press fitting (1), said clamp having an annular recess (86) of complementary shape to the collar (85) and extending axially as far as the cylindrical portion (2) of the press fitting (1).

## Revendications

1. Procédé pour obturer un conduit en vue d'effectuer un essai sous pression, comportant un raccord (1) comprimé qui peut être placé sur un tube à l'extrémité ouverte de ce tube et ainsi communiquer avec lui et qui comporte au moins du côté ouvert une partie (2) cylindrique et, s'y raccordant, un renflement (3) annulaire formant la zone de face frontale, et comportant un élément (4, 5, 8) d'obturation, qui peut être disposé à l'extrémité ouverte du raccord (1) comprimé, sur la région d'extrémité duquel, tournée vers le raccord (1) comprimé, est disposée une bague (7) d'étanchéité coopérant avec la face intérieure du raccord (1) comprimé et qui comporte un perçage (14) de mise à l'atmosphère s'étendant à travers lui,
**caractérisé**
a) en ce que l'élément d'obturation est constitué d'un boulon (4, 30, 55, 80),
b) d'une pièce (5, 31, 56, 82) de compression, qui est monté dessus et d'un écrou (6, 32, 57),
c) le boulon (4, 30, 55, 80) comportant un collet (10, 44, 66, 81) frontal comme surface d'application pour la bague (7, 33) d'étanchéité,
d) une partie (11, 45, 67) cylindrique pour le montage de la pièce (5, 31, 56, 82) de compression pouvant y coulisser axialement, et
e) une partie (13, 46, 68, 83) filetée, située côté extrémité et disposée de manière distincte de la partie (11, 45, 67) cylindrique, pour la réception de l'écrou (6, 32, 57),
f) ainsi que le perçage (14, 34) de mise à l'atmosphère qui s'étend à travers lui.

2. Dispositif suivant la revendication 1,
**caractérisé**
**en ce que** la masse de la bague (7, 33) d'étanchéité et le trajet relatif de coulissement entre le boulon (4, 30, 55, 80) et la pièce (5, 31, 56, 82) de compression sont prévues de manière à ce que, avant d'atteindre la position d'extrémité, la bague (7, 33) d'étanchéité vient en application de manière étanche, suivant une compression pouvant être réglée, sur la paroi intérieure de la partie (2) cylindrique du raccord (1) comprimé.

3. Dispositif suivant les revendications 1 et 2,
**caractérisé,**
**en ce que** l'écrou (6, 32) est muni d'un biseau (24, 47) et, sur la face latérale, d'un moletage (29).

4. Dispositif suivant l'une des revendications 1 à 3,
**caractérisé**
**en ce que** la pièce (5, 31) de compression comporte une partie (21, 48) en retrait, qui s'étend radialement vers l'extérieur et qui vient en contact sur la face frontale du renflement (3) annulaire du raccord (1) comprimé.

5. Dispositif suivant l'une des revendications 1 à 4,
**caractérisé**
**en ce que** la pièce (5) de compression est munie, du côté éloigné du raccord (1) comprimé, d'un évidement (25) annulaire dans lequel peut être enfilé un élément (23) de tourillon d'un crampon (9) pouvant être enfilé sur le raccord (1) comprimé, le crampon (9) s'étendant axialement jusqu'à la partie (2) cylindrique du raccord (1) comprimé.

6. Dispositif suivant l'une des revendications 1 à 4,
**caractérisé**
**en ce que** la pièce (31) de compression comporte, du côté éloigné du raccord (1) comprimé, une partie (42) filetée qui peut être vissée dans une partie (41) taraudée d'une douille (40) de fixation pouvant être enfilée radialement sur le raccord (1) comprimé, la douille (40) de fixation s'étendant axialement jusqu'à la partie (2) cylindrique du raccord (1) comprimé.

7. Dispositif suivant la revendication 6,
**caractérisé**
**en ce que** la pièce (31) de compression comporte, du côté de l'extrémité extérieure, un collet (36) qui s'étend radialement vers l'extérieur et dans lequel est ménagé un perçage (37) qui s'étend radialement dans le collet (36) et dans lequel peut être enfilé un dispositif (38) anti- torsion qui entre dans un évidement (39) ménagé en trou oblong dans le boulon (30).

8. Dispositif suivant la revendication 1 et 2,
**caractérisé**
**en ce que** la pièce (56) de compression comporte une ouverture (58) ménagée en trou oblong, par laquelle un dispositif (38) anti-torsion peut être enfilé dans un perçage (59) borgne, ménagé dans le boulon (55).

9. Dispositif suivant la revendication 1,
**caractérisé**
**en ce que** le perçage (34) comporte de manière continue, une grande section transversale et est muni du côté de l'entrée d'une partie (35) taraudée.

10. Dispositif suivant la revendication 1,
**caractérisé**
**en ce qu'**il fait suite au perçage (14) un canal (15) qui se rétrécit et qui devient ensuite une partie (16) taraudée qui présente une assez grande section transversale et dans laquelle une vis (8) de mise à l'atmosphère.

11. Dispositif suivant la revendication 1,
**caractérisé**
**en ce que**, pour empêcher que l'élément d'obturation ne soit repoussé axialement vers l'extérieur, il est prévu une bride constituée de deux hémi-coquilles (61, 62), qui a un contour intérieur adapté au contour extérieur de la zone d'étanchéité du raccord (1) comprimé et qui est munie côté entrée d'un collet (63) s'étendant radialement vers l'intérieur.

12. Dispositif suivant la revendication 11,
**caractérisé**
**en ce qu'**il est vissé dans une hémi-coquille (61) au moins deux boulons (64) qui s'étendent par des perçages ménagés en conséquence dans l'autre hémi-coquille (62) et sur lesquels peuvent être vissés des écrous (65).

13. Dispositif suivant la revendication 11,
**caractérisé**
**en ce que** les deux hémi-coquilles (61, 62) sont articulées l'une à l'autre et peuvent être immobilisées par un moyen de fermeture en la position fermée.

14. Dispositif suivant la revendication 11,
**caractérisé**
**en ce que**, en la position fermée, une douille (72) peut être enfilée sur les deux hémi-coquilles (70, 71)

15. Dispositif suivant la revendication 14,
**caractérisé**
**en ce que** la douille (62) peut être immobilisée axialement par rapport aux hémi-coquilles (70, 71).

16. Dispositif suivant l'une des revendications 1 à 3,
**caractérisé**
**en ce que** la pièce (82) de compression porte, dans la zone d'extrémité éloignée du raccord (1) comprimé, un collet (84) qui s'étend vers l'extérieur et par l'intermédiaire duquel peut être déplacée un crampon (85) qui peut être enfilé radialement sur le raccord (1) comprimé, qui comporte un évidement (86) annulaire réalisé de manière complémentaire du collet (85) et qui s'étend axialement jusqu'à la partie (2) cylindrique du raccord (1) comprimé.
